# EUROPEAN PATENT SPECIFICATION

(11) **EP 3 519 792 B1**
(45) Date of publication and mention of the grant of the patent: **06.11.2024**
(21) Application number: 17781192.4
(22) Date of filing: 22.09.2017
(51) Int. Cl.: G01M 17/02

(54) **METHOD AND SYSTEM FOR DETECTING A PRESSURE DISTRIBUTION IN A FOOTPRINT AREA OF A TIRE**
VERFAHREN UND SYSTEM ZUR DETEKTION EINER DRUCKVERTEILUNG IN EINEM AUFSTANDSFLÄCHENBEREICH EINES REIFENS
PROCÉDÉ ET SYSTÈME DE DÉTECTION D'UNE DISTRIBUTION DE PRESSION DANS UNE ZONE DE CONTACT AU SOL D'UN PNEU

(30) Priority: 30.09.2016 IT 201600098247
(43) Date of publication of application: 07.08.2019
(60) Divisional application: 24198501.9
(73) Proprietor: Pirelli Tyre S.p.A., 20126 Milano (IT)
(72) Inventor: SABATO, Diego, 20126 Milano (IT); MALOSIO, Anna Maria, 20126 Milano (IT)
(74) Representative: Tirloni, Bartolomeo
(86) International application number: PCT/IB2017/055752
(87) International publication number: WO 2018/060819

(56) References cited:
- EP-A2- 0 837 308
- ES-A1- 2 222 776

## Description

The present invention concerns a method and a system for detecting pressure distribution in the footprint area of a tire.

The articles "An Optical Method for Normal Contact Stress Measurement with Applications to Tire-Road Interaction" by Roth, Moore, Turner, Bridgestone/Firestone North American Tire, 2004 SEM X International Congress & Exposition on Experimental & Applied Mechanics, "An optical tire contact pressure test bench" by Castillo, Pérez De La Blanca, Cabrera & Simón, Department of Mechanical Engineering, University of Málaga, Campus El Ejido, 29013, Málaga, Spain - Vehicle System Dynamics, Feb 2007, and "Validation of a frustrated total internal reflection test bench for tire footprint pressure measurement" by Cheli, Zanoni, Sabato, Politecnico di Milano, Pirelli Tyre - Akron 2014, and the document ES 2 222 776 A1, describe a method for detecting pressure distribution in the footprint area of a tire, based on the suppression of total internal reflection of light.

The method comprises laterally illuminating a transparent plate in such a manner that the light rays propagate inside the plate, forming, with the line perpendicular to an upper surface, an angle greater than the critical angle of the plate material, pushing against the tread of an inflated tire against the surface, and acquiring an image of the resting surface with a camera placed under the plate.

Given that the degree of suppression of the total internal reflection of the rays on the resting surface (and thus local brightness) is a function of the local pressure exerted by the footprint of the tire resting on the plate, it is possible to obtain the pressure distribution by processing the acquired image.

To improve the results, a thin sheet is interposed between the tread and the plate.

The Applicant has observed that the characteristics of the interposed sheet play an essential role in the quality of the results of the pressure distribution detection method and that this sheet is not selected in an optimal manner in the prior art.

The Applicant has posed the issue of developing a method for detecting pressure distribution in the footprint area of a tire that is capable of providing accurate results with a high degree of sensitivity.

Lastly, the Applicant has found that by selecting the interposed sheet on the basis of specific selection criteria, a detection method that has the above-mentioned desired characteristics is obtained.

The term "maximum allowable pressure" is understood as the maximum pressure at which it is permitted to inflate the tire (value stamped on the tire according to the reference standards (e.g. ETRTO, NHTSA, etc.).

The term "load index" is understood as the maximum load value that the tire can bear (value stamped on the tire according to the reference standards (e.g. ETRTO, NHTSA, etc.).

The expression "characteristic curve associated with an assembly formed by a sheet, a plate, a beam of light rays and a camera" is understood as a curve that interrelates the pressure values exerted on the sheet and the corresponding grey-level values in the image acquired by the camera, once the operating conditions of the camera have been set (sensor sensitivity, exposure time etc.). An exemplary measurement test for determining the characteristic curve is described below. It is noted that the above-mentioned assembly, with the above-mentioned operating conditions used to determine the characteristic curve, is the same assembly used to perform the pressure distribution detection test.

In one aspect, the invention concerns a method for detecting a pressure distribution in a footprint area of a tire according to claim 1.

In another aspect, the invention concerns a system for detecting a pressure distribution in a footprint area of a tire according to claim 10.

According to the Applicant, the above-mentioned characteristics make the pressure distribution detection method particularly accurate and sensitive.

In fact, the fact that at the predetermined maximum pressure to be detected, the characteristic curve assumes a grey-level value that is less than or equal to 90% of said full-scale grey level, makes it possible to measure all pressure values in the range of interest, thus avoiding that a substantial number of pixels assume a saturation or near-saturation grey level. In this situation, it would in fact become difficult to distinguish between different pressure values that would give rise to the same saturation grey level or to very close grey levels.

Moreover, the fact that the first derivative of the characteristic curve is greater than or equal to 2 levels of grey per bar at least in a pressure range comprised between 10% and 70% of the maximum pressure, ensures sufficient differentiation of the brightness response of pixels corresponding to slightly different pressure levels, and thus sufficient sensitivity. Furthermore, according to the Applicant, the above-mentioned requirement in relation to the above-mentioned test run ensures that the interposed sheet does not adhere to the plate, or that the adherence thereof is sufficiently slight. In fact, in the case of excessive adhesion to the plate, the sheet leaves spurious regions of brightness originating from the previous measurements, which bring about changes in excess of the measured pressure values. The test run mentioned above was developed by the Applicant to verify that these spurious regions of brightness do not exceed a threshold of acceptability.

Furthermore, according to the Applicant, this requirement ensures that the interposed sheet does not unacceptably generate memory effects, owing to which, due to excessive relaxation times of the material after removal of the cause of the deformation, the material retains at least part of the deformations to which it was subjected in the previous tests, yielding measured pressure values that are higher than the real values.

Note that the present invention encompasses in the above-mentioned measurement method, the use of any sheet that meets the requirements described hereinabove relative to the characteristic curve and the test run, regardless of the fact that this characteristic curve is actually determined and/or the test run is actually carried out for the purpose of selecting the sheet.

The present invention can offer one or more of the following preferred characteristics.

Preferably, at said predetermined maximum pressure to be detected, said characteristic curve assumes a grey-level value that is less than or equal to 80% of said full-scale grey level, more preferably less than or equal to 70% of said full-scale grey level. In this manner, even higher dynamics are ensured in the range of interest.

Preferably, said characteristic curve has a first derivative that is greater than or equal to 3 levels of grey per bar, more preferably greater than or equal to 5 levels of grey per bar, at least in a pressure range comprised between 10% and 70% of said maximum pressure, more preferably between 10% and 90% of said maximum pressure. Sensitivity in the desired measurement range is thus optimized.

Preferably, said characteristic curve has a first derivative that is less than or equal to 50 levels of grey per bar, more preferably less than 30 levels of grey per bar, at least in a pressure range comprised between 10% and 70% of said maximum pressure, more preferably between 10% and 80% of said maximum pressure. Sensitivity in sufficiently broad measurement range is thus optimized.

Said sheet is preferably made of elastomeric thermoplastic polyurethane.

The term "elastomeric thermoplastic polyurethane" is understood as elastomeric polyurethane polyethers and elastomeric polyurethane polyesters.

Generally, polyurethanes are understood as the products of the polymerization of at least one polyalcohol (polyol) having two or more hydroxyl groups per molecule with at least one isocyanate having two or more isocyanate groups per molecule (polyisocyanate). Depending on the type of polyol, the polyurethanes are further divided into two main groups: polyethers and polyesters.

The isocyanates used in the preparation of the present elastomeric polyurethanes can be of the aliphatic type, preferably selected from among diisocyanates such as hexamethylene diisocyanate, isophorone diisocyanate, or dicyclohexyl-4,4' diisocyanate, or of the aromatic type, preferably selected from among diisocyanates such as naphthalene diisocyanate, para-phenylene diisocyanate, toluene diisocyanate (TDI) and methylene diphenyl diisocyanate (MDI), more preferably methylene diphenyl diisocyanate. Preferred elastomeric thermoplastic polyurethanes are those obtained by polymerization of aromatic isocyanates, more preferably by polymerization of aromatic diisocyanates selected from among naphthalene diisocyanate, para-phenylene diisocyanate, toluene diisocyanate (TDI) and methylene diphenyl diisocyanate (MDI).

Short-chain diols such as 1,4-butanediol for example can be used as rigid phase "chain extenders".

Preferred polyether polyurethanes are those obtained by polymerization of isocyanates, preferably of aromatic isocyanates, with polyols derived mainly from the polymerization of tetrahydrofuran (polyTHF), from the polymerization of propylene oxide or the polymerization of ethylene oxide, or by mixtures of propylene oxide and ethylene oxide. Preferred polyester polyurethanes are those obtained by polymerization of isocyanates, preferably of aromatic isocyanates, with polyols derived preferably from the polymerization of aliphatic dicarboxylic acids, including for example adipic acid, with glycols, preferably ethylene glycol, or from the polymerization of caprolactone.

Elastomeric polyurethanes that are suitable as the principal, preferably sole, components of the elastomeric film according to the present invention are selected from the group of elastomeric thermoplastic polyurethanes (TPU) marketed under the trade names of Argoflex^{®} (Argotec), Argothane^{®} (Argotec), Epurex Platilon^{®} line, preferably Platilon^{®} U (Covestro), Desmopan^{®} (Covestro), Texin^{®} (Covestro), Pearlthane^{™} (Lubrizol), Estane^{®} (Lubrizol), Pellethane^{®} (Lubrizol), Elastollan^{®} (BASF), and Adilithe^{®} (Merylithe).

The elastomeric thermoplastic polyurethanes marketed under the trade names of Argoflex^{®} 19205 (polyether), Argothane^{®} 19103 (polyether), Epurex Platilon^{®} line, more preferably Platilon^{®} U like Epurex U073 (polyether), Epurex 4201AU (polyether) and Epurex 4100D (polyester), and Platilon^{®} U 4180 DK are particularly preferred.

Preferably, said sheet is of a thickness of less than or equal to 150 microns, more preferably less than or equal to 100 microns, and/or more than or equal to 10 microns.

In fact, the Applicant has found that the above-mentioned materials and/or the above-mentioned thicknesses give the sheet optimal characteristics in terms of the quality of the results of the measurement method, consistently with the fact of meeting the above-mentioned selection requirements.

Further characteristics and advantages will become more apparent from the detailed description of several example, but not exclusive, embodiments of a method and a system for detecting a pressure distribution in the footprint area of a tire in accordance with the present invention. This description is provided herein below with reference to the attached drawings, which are provided solely as approximate and thus non-limiting examples, and of which:
- Figure 1 is a schematic side view, which is not to scale, showing an exemplary measurement system in accordance with the present invention.
- Figure 2 is a schematic perspective view of a calibration device for determining the characteristic curves.
- Figures 3-5 show some examples of characteristic curves, solely for illustrative purposes. An exemplary measurement system in accordance with the present invention and that implements the method of the present invention is indicated in Figure 1 by the number 1. The system 1 comprises a plate 2 of transparent material having a resting surface 3. Suitable transparent materials can consist of glass, plexiglass or PMMA.

The system 1 comprises a camera 4 typically arranged under the plate and oriented so as to acquire digital images of the resting surface 3.

Suitable light sources 5 (e.g. LEDs) are arranged laterally with respect to the plate so as to enable inputting of a beam of light rays 6 into the plate, said light rays 6 propagating inside the plate owing to the phenomenon of total internal reflection. Based on this phenomenon, the rays forming an angle 7, with respect to the line perpendicular to the resting surface, said angle being greater than the internal critical angle associated with the resting surface, are reflected totally. For example, in the case of a glass plate in air, this internal critical angle is equal to about 41°.

When a tread 11 of a tire 10 is rested on the resting surface, this total internal reflection is suppressed because of the variation in the refraction index of the medium external to the plate. Therefore, some light rays 8 are diffused by the resting surface and they can be captured by the camera 4.

Typically, the greater the pressure exerted locally by the tire on the resting surface, the greater the number of rays diffused locally by the resting surface, in that the number of contact points between the tread and the surface is greater.

Therefore, the corresponding pressure can be associated with a given grey level in the image acquired by the camera (grey levels corresponding to the brightness detected). During measurement, a sheet 9 is interposed in contact between the resting surface 3 and the tread 11 of the tire 10.

Therefore, for the purpose of associating, pixel by pixel, the corresponding pressure levels with the grey levels in the image acquired by the camera, the characteristic curve of the sheet 9 associated with the test system used to acquire the image and essentially made up of the plate, the sheet, the lighting system (under the operating conditions utilized to acquire the image) and the camera (under the operating conditions utilized to acquire the image) should be known. These operating conditions are determined beforehand through the acquisition of a plurality of images obtained by varying the most influential parameters (including for example sensor sensitivity, exposure time, power of the light source, etc.) and selecting one of the conditions that has generated images of acceptable quality. These conditions are maintained during the pressure distribution detection process.

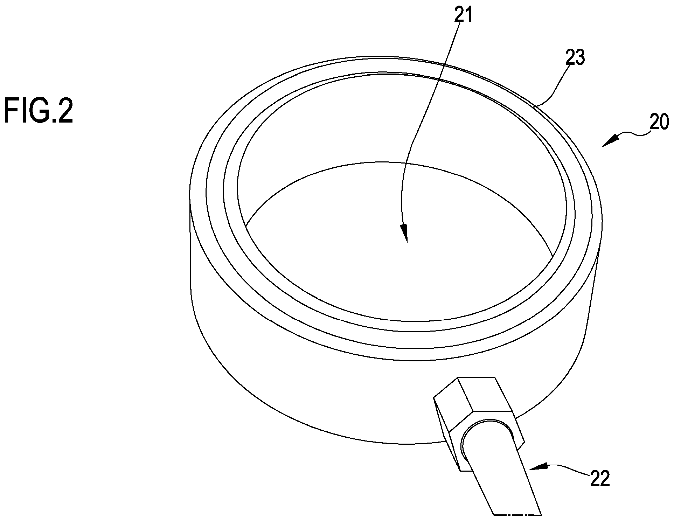

A calibration device 20 of the type shown in Figure 2 can be used for the purpose of determining the characteristic curve.

This device, which is substantially shaped in the form of a cup made of a metal such as steel, has a cavity 21 within which the pressure can be changed, for example by letting air in or out through a conduit 22 in communication with the cavity. A suitable gasket 23 (e.g. an O-ring) extends around the entire circular edge to ensure sufficient airtightness.

The device 20 is rested on the sheet 9 of the system 1, without the tire 10, with the gasket 23 adhering to the sheet 9, and the pressure in the cavity 21 is regulated.

The device 20 is of a diameter that is adequate (for example 5 cm) for the device 20 to exert substantially homogeneous pressure on a sufficiently large area of the sheet 9. Furthermore, the device 20 is of a weight that is suitable (for example 200 g) for developing adequate pressure inside the cavity 21, e.g. 10 bar.

One then proceeds to change the pressure in the cavity 21 in a controlled manner and the corresponding grey-level value is detected, mediating on the area affected by the device 20.

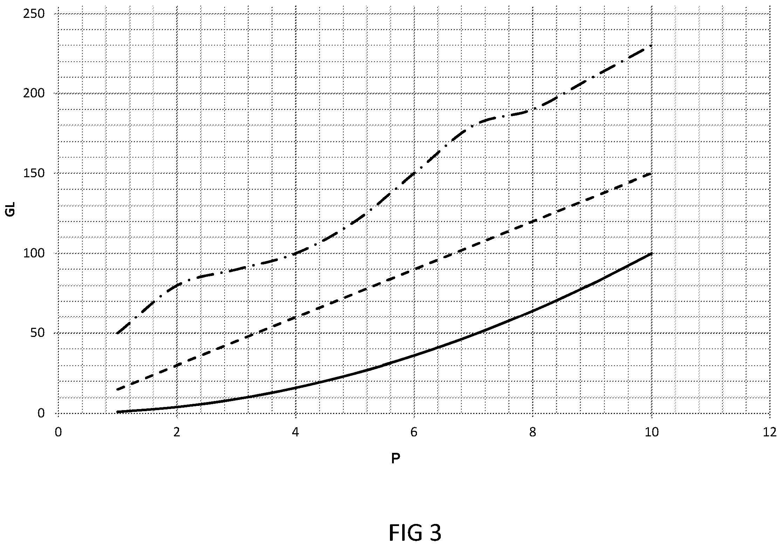

Figure 3 shows some examples of characteristics curves that meet the requirements of the present invention, in which the predetermined maximum pressure to be detected is equal to 10 bar. The vertical axis in Figure 3 represents the pressure expressed in bars and the horizontal axis represents the corresponding grey-level value (wherein the full scale is equal to 256). As can be seen, at the maximum pressure of 10 bar, the characteristic curves have a grey-level value that is less than or equal to 230 levels of grey (that is, 90% of the full-scale grey level).

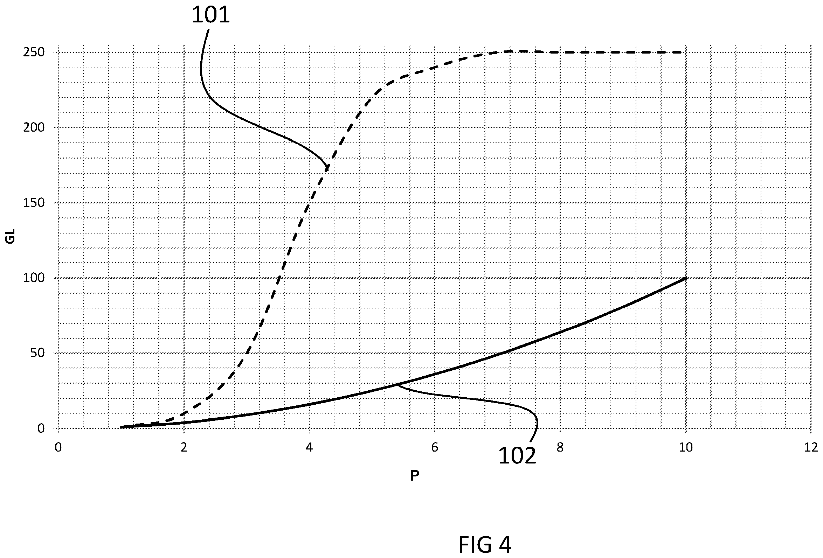

Figure 4 compares an example of a characteristic curve (line 102) that meets the requirements of the present invention and an example of a comparative curve (line 101) that tends to saturate too quickly, the predetermined maximum pressure to be detected being equal to 10 bar. At the maximum pressure, line 102 has a grey level equal to about 100 (below 90% of the full scale), whereas line 101 has a grey level equal to about 250 (above 90% of the full scale).

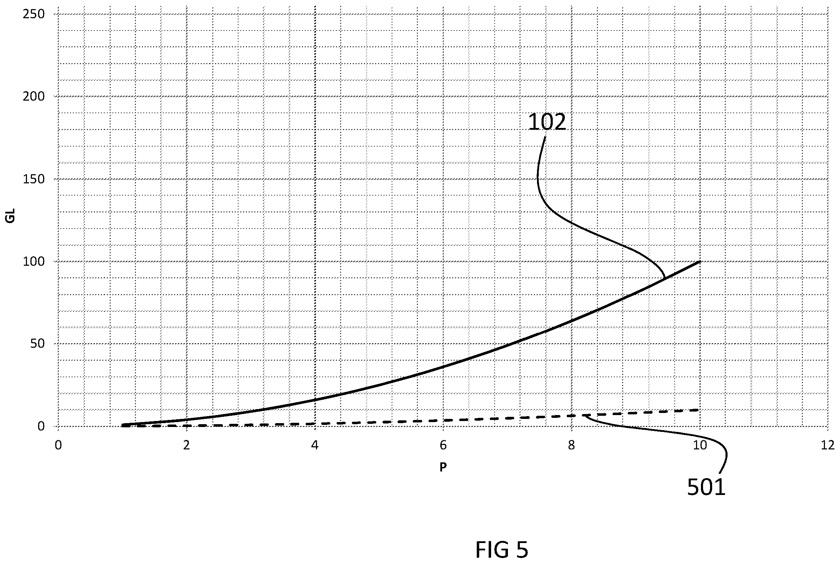

Figure 5 compares the above-mentioned example of a characteristic curve (line 102) and a comparative curve (line 501) that has a derivative that is too low (less than 2 levels of grey per bar), determining excessive lowering of the corresponding grey-level values.

To detect the pressure distribution in a footprint area of the tire, one can proceed using the following method.

The tire 10 to be tested is mounted on a wheel rim and inflated at a pressure of at least 0.5 bar, typically between 1 and 3 bar.

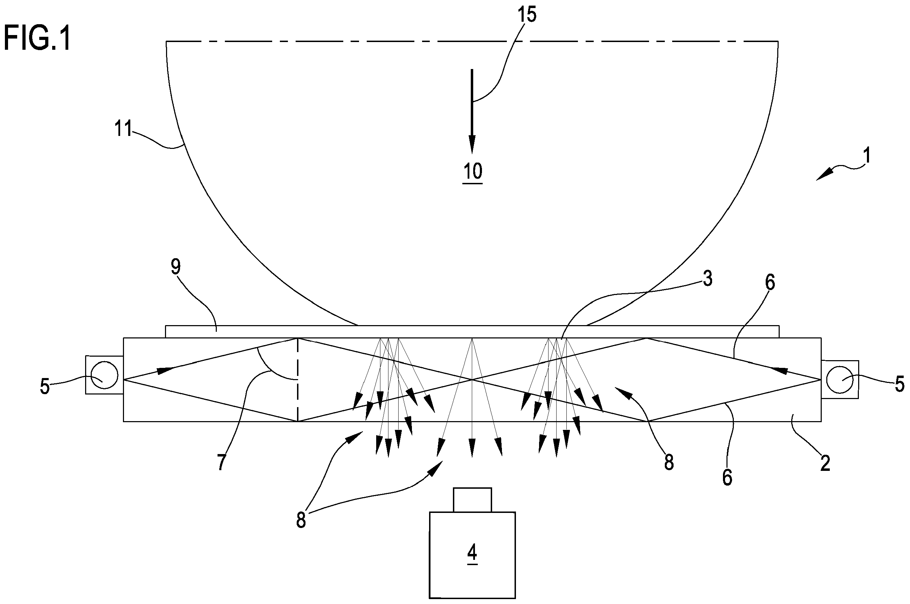

After having rested the tread 11 on the sheet 9, the tread is pushed against the resting surface with a certain force 15, for example applied on the axis of the wheel rim and directed perpendicularly to the plate (in Figure 1, the force 15 is directed vertically downwards). In this manner, a footprint is generated on the resting surface, said footprint having a pressure distribution on the footprint area.

At this point, a digital image of the footprint area is acquired, in which a grey level is associated with each pixel, the image being characterized by a full-scale grey level, for example equal to level 256 for the maximum brightness.

The image is then processed (as known and described for example in the articles cited hereinabove and included here for reference) for the purpose of detecting the pressure distribution in the footprint area, using the characteristic curve associated with the test system used.

According to the present invention, the sheet 9 used is for example a sheet of polyurethane marketed by Covestro^{®} with the name Platilon^{®} U 4180 DK Night Black and having a thickness of 25 µm.

Subjecting the above-mentioned sheet of Platilon^{®} U 4180 DK Night Black to the above-mentioned test run, with an inflation pressure equal to 2 bar and with a load equal to 400 Kg, the difference, in absolute value, between the first and the second area as defined above is equal to about 2% of the first area.

## Claims

1. A method for detecting a pressure distribution in a footprint area of a tire (10), comprising:
- arranging said tire mounted on a wheel rim and inflated;
- arranging a plate (2) of transparent material having a resting surface (3), and a camera (4) suitable for acquiring images of said resting surface;
- inputting a beam of light rays (6) into the plate, said light rays (6) propagating at an angle (7), with respect to a line perpendicular to said resting surface, said angle (7) being greater than an internal critical angle associated with said resting surface;
- pushing a tread (11) of said tire against said resting surface with a force, for the purpose of generating said footprint area on said resting surface;
- acquiring an image of said footprint area, said image having a full-scale grey level;
- processing said image for the purpose of detecting said pressure distribution in said footprint area,
wherein a sheet (9) is interposed between said tread (11) and said resting surface (3) during the acquisition of said image,
**characterized in that** said sheet is selected in such a manner that it satisfies the three following conditions:
1) at a predetermined maximum pressure to be detected, comprised between 1 bar and 50 bar, a characteristic curve associated to the assembly formed by said sheet, said plate, said beam of light rays and said camera, assumes a grey-level value that is less than or equal to 90% of said full-scale grey level, wherein the characteristic curve interrelates the pressure values exerted on the sheet and the corresponding grey-level values in the image acquired by the camera (4),
2) said characteristic curve has a first derivative that is greater than or equal to 2 levels of grey per bar at least in a pressure range comprised between 10% and 70% of said maximum pressure, and
3) in a test run comprising the following eight operations, at a temperature ranging between 20° and 30°:
a) inflating said tire (10) at a pressure greater than or equal to 1 bar;
b) resting said tread on said resting surface (3), with said sheet (9) interposed between said tread and said resting surface;
c) inputting said beam of light rays into the plate;
d) pushing said tread against said resting surface with a force perpendicular to said resting surface and having a value that increases linearly for one minute up to a predetermined value equal to half of a load index of said tire,
e) acquiring a first image of said footprint area at said predetermined value of the perpendicular force;
f) subsequently increasing said value of the perpendicular force linearly for one minute up to a maximum value equal to said load index and, subsequently, keeping said tire pushed against said resting surface with said force equal to said maximum value for a time interval equal to 5 minutes;
g) subsequently decreasing said value of the perpendicular force linearly for one minute from said maximum value down to said predetermined value and acquiring a second image of said footprint area at said predetermined value,
h) associating a corresponding pressure value to each pixel of the first and second image by way of said characteristic curve,
a difference, in absolute value, between a first area occupied by pixels of the first image, at which said corresponding pressure value is greater than or equal to 0.5 bar, and a second area occupied by pixels of the second image, at which said corresponding pressure value is greater than or equal to 0.5 bar, is less than or equal to 5% of said first area.

2. The method according to claim 1, wherein, at said predetermined maximum pressure to be detected, said characteristic curve assumes a grey-level value that is less than or equal to 80% of said full-scale grey level, preferably less than or equal to 70% of said full-scale grey level.

3. The method according to any one of the preceding claims, wherein said characteristic curve has a first derivative that is greater than or equal to 3 levels of grey per bar, more preferably greater than or equal to 5 levels of grey per bar, at least in a pressure range comprised between 10% and 70% of said maximum pressure, preferably between 10% and 90% of said maximum pressure.

4. The method according to any one of the preceding claims, wherein said characteristic curve has a first derivative that is less than or equal to 50 levels of grey per bar, more preferably less than or equal to 30 levels of grey per bar, at least in a pressure range comprised between 10% and 70% of said maximum pressure.

5. The method according to any one of the preceding claims, wherein said sheet is made of elastomeric thermoplastic polyurethane.

6. The method according to claim 5, wherein said sheet is made of elastomeric polyurethane polyether or elastomeric polyurethane polyester.

7. The method according to claim 5 or 6, wherein said elastomeric thermoplastic polyurethane is obtained by polymerization of aromatic isocyanates, preferably by polymerization of aromatic diisocyanates selected from among: naphthalene diisocyanate, para-phenylene diisocyanate, toluene diisocyanate (TDI) and methylene diphenyl diisocyanate (MDI).

8. The method according to claim 5 or 6 or 7, wherein said elastomeric thermoplastic polyurethane is selected from the group of elastomeric thermoplastic polyurethanes (TPU) marketed under the trade names of Argoflex^{®} (Argotec), Argothane^{®} (Argotec), Epurex Platilon^{®} line, preferably Platilon^{®} U (Covestro), Desmopan^{®} (Covestro), Texin^{®} (Covestro), Pearlthane^{™} (Lubrizol), Estane^{®} (Lubrizol), Pellethane^{®} (Lubrizol), Elastollan^{®} (BASF), and Adilithe^{®} (Merylithe).

9. The method according to any one of the preceding claims, where said sheet is of a thickness of less than or equal to 150 microns and more than or equal to 10 microns.

10. A system (1) for detecting a pressure distribution in a footprint area of a tire (10), the system comprising:
- a plate (2) of transparent material having a resting surface (3),
- a camera (4) suitable for acquiring a digital image of said resting surface (11);
- a light source (5) configured to input a beam of light rays (6) into the plate, said light rays (6) propagating into the plate at an angle (7), with respect to a line perpendicular to said resting surface, said angle (7) being greater than an internal critical angle associated with said resting surface;
- a sheet (9) placed in contact with said resting surface,
**characterized in that** said sheet satisfies the three following conditions:
1) at a predetermined maximum pressure to be detected, comprised between 1 bar and 50 bar, a characteristic curve associated with the assembly formed by said sheet (9), said plate (2), said beam of light rays (6) and said camera (4), assumes a grey-level value that is less than or equal to 90% of a full-scale grey level of said digital image, wherein the characteristic curve interrelates the pressure values exerted on the sheet and the corresponding grey-level values in the image acquired by the camera (4),
2) said characteristic curve has a first derivative that is greater than or equal to 2 levels of grey per bar at least in a pressure range comprised between 10% and 70% of said maximum pressure, and
3) in a test run comprising the following eight operations, at a temperature ranging between 20° and 30°:
a) inflating said tire (10) at a pressure greater than or equal to 1 bar;
b) resting a tread (11) of said tire on said resting surface (3), with said sheet (9) interposed between said tread and said resting surface;
c) inputting said beam of light rays (6) into the plate;
d) pushing said tread against said resting surface with a force perpendicular to said resting surface and having a value that increases linearly for one minute up to a predetermined value equal to half of a load index of said tire,
e) acquiring a first image of said footprint area at said predetermined value of the perpendicular force;
f) subsequently increasing said value of the perpendicular force linearly for one minute up to a maximum value equal to said load index and, subsequently, keeping said tire pushed against said resting surface with said force equal to said maximum value for a time interval equal to 5 minutes;
g) subsequently decreasing said value of the perpendicular force linearly for one minute from said maximum value down to said predetermined value and acquiring a second image of said footprint area at said predetermined value,
h) associating a corresponding pressure value to each pixel of the first and second image by way of said characteristic curve,
a difference, in absolute value, between a first area occupied by pixels of the first image, at which said corresponding pressure value is greater than or equal to 0.5 bar, and a second area occupied by pixels of the second image, at which said corresponding pressure value is greater than or equal to 0.5 bar, is less than or equal to 5% of said first area.

11. The system according to claim 10, wherein said sheet is made of elastomeric thermoplastic polyurethane, preferably elastomeric polyurethane polyether or elastomeric polyurethane polyester.

## Patentansprüche

1. Verfahren zum Detektieren einer Druckverteilung in einer Aufstandsfläche eines Reifens (10), umfassend:
- Anordnen des auf einer Radfelge montierten und aufgeblasenen Reifens;
- Anordnen einer Platte (2) aus transparentem Material, die eine Auflagefläche (3) aufweist, und einer Kamera (4), die zum Erfassen von Bildern der Auflagefläche geeignet ist;
- Einleiten eines Lichtstrahlenbündels (6) in die Platte, wobei sich die Lichtstrahlen (6) in einem Winkel (7) in Bezug auf eine Linie senkrecht zu der Auflagefläche ausbreiten, wobei der Winkel (7) größer ist als ein interner kritischer Winkel, der der Auflagefläche zugeordnet ist;
- Drücken einer Lauffläche (11) des Reifens gegen die Auflagefläche mit einer Kraft zum Zweck des Erzeugens der Aufstandsfläche auf der Auflagefläche;
- Erfassen eines Bildes der Aufstandsfläche, wobei das Bild eine vollwertige Graustufe aufweist;
- Verarbeiten des Bildes zum Zweck des Detektierens der Druckverteilung in der Aufstandsfläche,
wobei eine Scheibe (9) während der Erfassung des Bildes zwischen der Lauffläche (11) und der Auflagefläche (3) eingefügt wird,
**dadurch gekennzeichnet, dass** die Scheibe auf eine solche Weise ausgewählt wird, dass sie die folgenden drei Bedingungen erfüllt:
1) bei einem vorbestimmten zu detektierenden maximalen Druck, der zwischen 1 bar und 50 bar liegt, nimmt eine charakteristische Kurve, die der aus der Scheibe, der Platte, dem Lichtstrahlenbündel und der Kamera gebildeten Anordnung zugeordnet ist, einen Graustufenwert an, der kleiner als oder gleich 90 % der vollwertigen Graustufe ist, wobei die charakteristische Kurve die auf die Scheibe ausgeübten Druckwerte und die entsprechenden Graustufenwerte in dem von der Kamera (4) erfassten Bild in Beziehung setzt,
2) die charakteristische Kurve weist eine erste Ableitung auf, die größer als oder gleich 2 Graustufen pro bar ist, mindestens in einem Druckbereich, der zwischen 10 % und 70 % des maximalen Drucks liegt, und
3) in einem Testlauf, der die folgenden acht Vorgänge umfasst, bei einer Temperatur im Bereich zwischen 20 ° und 30 °:
a) Aufblasen des Reifens (10) bei einem Druck größer als oder gleich 1 bar;
b) Auflegen der Lauffläche auf der Auflagefläche (3), wobei die Scheibe (9) zwischen der Lauffläche und der Auflagefläche eingefügt ist;
c) Einleiten des Lichtstrahlenbündels in die Platte;
d) Drücken der Lauffläche gegen die Auflagefläche mit einer Kraft, die senkrecht zu der Auflagefläche verläuft und einen Wert aufweist, der für eine Minute bis zu einem vorbestimmten Wert, der gleich der Hälfte eines Lastindex des Reifens ist, linear ansteigt,
e) Erfassen eines ersten Bildes der Aufstandsfläche bei dem vorbestimmten Wert der senkrechten Kraft;
f) anschließend lineares Erhöhen des Werts der senkrechten Kraft für eine Minute bis zu einem Maximalwert, der gleich dem Lastindex ist, und anschließend Gedrückthalten des Reifens gegen die Auflagefläche mit der Kraft, die gleich dem Maximalwert ist, für ein Zeitintervall gleich 5 Minuten;
g) anschließend lineares Verringern des Werts der senkrechten Kraft für eine Minute von dem Maximalwert bis zu dem vorbestimmten Wert und Erfassen eines zweiten Bildes der Aufstandsfläche bei dem vorbestimmten Wert,
h) Zuordnen eines entsprechenden Druckwerts zu jedem Pixel des ersten und zweiten Bildes anhand der charakteristischen Kurve,
eine Differenz in absoluten Werten zwischen einer ersten Fläche, die von Pixeln des ersten Bildes eingenommen wird, bei der der entsprechende Druckwert größer als oder gleich 0,5 bar ist, und einer zweiten Fläche, die von Pixeln des zweiten Bildes eingenommen wird, bei der der entsprechende Druckwert größer als oder gleich 0,5 bar ist, kleiner als oder gleich 5 % der ersten Fläche ist.

2. Verfahren nach Anspruch 1, wobei bei dem vorbestimmten zu detektierenden maximalen Druck die charakteristische Kurve einen Graustufenwert annimmt, der kleiner als oder gleich 80 % der vollwertigen Graustufe, bevorzugt kleiner als oder gleich 70 % der vollwertigen Graustufe ist.

3. Verfahren nach einem der vorstehenden Ansprüche, wobei die charakteristische Kurve eine erste Ableitung aufweist, die größer als oder gleich 3 Graustufen pro bar, bevorzugter größer als oder gleich 5 Graustufen pro bar ist, mindestens in einem Druckbereich, der zwischen 10 % und 70 % des maximalen Drucks, bevorzugt zwischen 10 % und 90 % des maximalen Drucks liegt.

4. Verfahren nach einem der vorstehenden Ansprüche, wobei die charakteristische Kurve eine erste Ableitung aufweist, die kleiner als oder gleich 50 Graustufen pro bar, bevorzugter kleiner als oder gleich 30 Graustufen pro bar ist, mindestens in einem Druckbereich, der zwischen 10 % und 70 % des maximalen Drucks liegt.

5. Verfahren nach einem der vorstehenden Ansprüche, wobei die Scheibe aus elastomerem thermoplastischem Polyurethan hergestellt ist.

6. Verfahren nach Anspruch 5, wobei die Scheibe aus elastomerem Polyurethan-Polyether oder elastomerem Polyurethan-Polyester hergestellt ist.

7. Verfahren nach Anspruch 5 oder 6, wobei das elastomere thermoplastische Polyurethan durch Polymerisation von aromatischen Isocyanaten, bevorzugt durch Polymerisation von aromatischen Diisocyanaten erhalten wird, die ausgewählt sind aus: Naphthalindiisocyanat, para-Phenylendiisocyanat, Toluoldiisocyanat (TDI) und Methylendiphenyldiisocyanat (MDI).

8. Verfahren nach Anspruch 5 oder 6 oder 7, wobei das elastomere thermoplastische Polyurethan ausgewählt ist aus der Gruppe von elastomeren thermoplastischen Polyurethanen (TPU), die unter den Handelsnamen von Argoflex^{®} (Argotec), Argothane^{®} (Argotec), Epurex Platilon^{®}-Reihe, bevorzugt Platilon^{®} U (Covestro), Desmopan^{®} (Covestro), Texin^{®} (Covestro), Pearlthane^{™} (Lubrizol), Estane^{®} (Lubrizol), Pellethane^{®} (Lubrizol), Elastollan^{®} (BASF) und Adilithe^{®} (Merylithe) vermarktet werden.

9. Verfahren nach einem der vorstehenden Ansprüche, wobei die Scheibe eine Dicke von weniger als oder gleich 150 Mikrometer und mehr als oder gleich 10 Mikrometer aufweist.

10. System (1) zum Detektieren einer Druckverteilung in einer Aufstandsfläche eines Reifens (10), wobei das System umfasst:
- eine Platte (2) aus transparentem Material, die eine Auflagefläche (3) aufweist,
- eine Kamera (4), die zum Erfassen eines digitalen Bildes der Auflagefläche (11) geeignet ist;
- eine Lichtquelle (5), die so konfiguriert ist, dass sie ein Lichtstrahlenbündel (6) in die Platte leitet, wobei sich die Lichtstrahlen (6) in einem Winkel (7) in Bezug auf eine Linie senkrecht zu der Auflagefläche in die Platte ausbreiten, wobei der Winkel (7) größer ist als ein interner kritischer Winkel, der der Auflagefläche zugeordnet ist;
- eine Scheibe (9), die in Kontakt mit der Auflagefläche platziert ist,
**dadurch gekennzeichnet, dass** die Scheibe die folgenden drei Bedingungen erfüllt:
1) bei einem vorbestimmten zu detektierenden maximalen Druck, der zwischen 1 bar und 50 bar liegt, nimmt eine charakteristische Kurve, die der aus der Scheibe (9), der Platte (2), dem Lichtstrahlenbündel (6) und der Kamera (4) gebildeten Anordnung zugeordnet ist, einen Graustufenwert an, der kleiner als oder gleich 90 % einer vollwertigen Graustufe des digitalen Bildes ist, wobei die charakteristische Kurve die auf die Scheibe ausgeübten Druckwerte und die entsprechenden Graustufenwerte in dem von der Kamera (4) erfassten Bild in Beziehung setzt,
2) die charakteristische Kurve weist eine erste Ableitung auf, die größer als oder gleich 2 Graustufen pro bar ist, mindestens in einem Druckbereich, der zwischen 10 % und 70 % des maximalen Drucks liegt, und
3) in einem Testlauf, der die folgenden acht Vorgänge umfasst, bei einer Temperatur im Bereich zwischen 20 ° und 30 °:
a) Aufblasen des Reifens (10) bei einem Druck größer als oder gleich 1 bar;
b) Auflegen einer Lauffläche (11) des Reifens auf der Auflagefläche (3), wobei die Scheibe (9) zwischen der Lauffläche und der Auflagefläche eingefügt ist;
c) Einleiten des Lichtstrahlenbündels (6) in die Platte;
d) Drücken der Lauffläche gegen die Auflagefläche mit einer Kraft, die senkrecht zu der Auflagefläche verläuft und einen Wert aufweist, der für eine Minute bis zu einem vorbestimmten Wert, der gleich der Hälfte eines Lastindex des Reifens ist, linear ansteigt,
e) Erfassen eines ersten Bildes der Aufstandsfläche bei dem vorbestimmten Wert der senkrechten Kraft;
f) anschließend lineares Erhöhen des Werts der senkrechten Kraft für eine Minute bis zu einem Maximalwert, der gleich dem Lastindex ist, und anschließend Gedrückthalten des Reifens gegen die Auflagefläche mit der Kraft, die gleich dem Maximalwert ist, für ein Zeitintervall gleich 5 Minuten;
g) anschließend lineares Verringern des Werts der senkrechten Kraft für eine Minute von dem Maximalwert bis zu dem vorbestimmten Wert und Erfassen eines zweiten Bildes der Aufstandsfläche bei dem vorbestimmten Wert,
h) Zuordnen eines entsprechenden Druckwerts zu jedem Pixel des ersten und zweiten Bildes anhand der charakteristischen Kurve,
eine Differenz in absoluten Werten zwischen einer ersten Fläche, die von Pixeln des ersten Bildes eingenommen wird, bei der der entsprechende Druckwert größer als oder gleich 0,5 bar ist, und einer zweiten Fläche, die von Pixeln des zweiten Bildes eingenommen wird, bei der der entsprechende Druckwert größer als oder gleich 0,5 bar ist, kleiner als oder gleich 5 % der ersten Fläche ist.

11. System nach Anspruch 10, wobei die Scheibe aus elastomerem thermoplastischem Polyurethan, bevorzugt elastomerem Polyurethan-Polyether oder elastomerem Polyurethan-Polyester hergestellt ist.

## Revendications

1. Procédé pour détecter une répartition de pression dans une zone d'empreinte d'un pneumatique (10), comprenant :
- la disposition dudit pneumatique monté sur une jante de roue et gonflé ;
- la disposition d'une plaque (2) en matériau transparent présentant une surface de repos (3), et une caméra (4) adaptée pour acquérir des images de ladite surface de repos ;
- l'introduction d'un faisceau de rayons lumineux (6) dans la plaque, lesdits rayons lumineux (6) se propageant selon un angle (7), par rapport à une ligne perpendiculaire à ladite surface de repos, ledit angle (7) étant supérieur à un angle critique interne associé à ladite surface de repos ;
- la poussée d'une bande de roulement (11) dudit pneumatique contre ladite surface de repos avec une force, dans le but de générer ladite zone d'empreinte sur ladite surface de repos ;
- l'acquisition d'une image de ladite zone d'empreinte, ladite image présentant un niveau de gris à grande échelle ;
- le traitement de ladite image dans le but de détecter ladite répartition de pression dans ladite zone d'empreinte,
dans lequel une feuille (9) est interposée entre ladite bande de roulement (11) et ladite surface de repos (3) lors de l'acquisition de ladite image,
**caractérisé en ce que** ladite feuille est choisie de telle manière qu'elle satisfasse aux trois conditions suivantes :
1) à une pression maximale prédéterminée à détecter, comprise entre 1 bar et 50 bar, une courbe caractéristique associée à l'ensemble formé par ladite feuille, ladite plaque, ledit faisceau de rayons lumineux et ladite caméra, prend une valeur de niveau de gris qui est inférieure ou égale à 90 % dudit niveau de gris à grande échelle, dans lequel la courbe caractéristique interrelie les valeurs de pression exercées sur la feuille et les valeurs de niveau de gris correspondantes dans l'image acquise par la caméra (4),
2) ladite courbe caractéristique présente une première dérivée supérieure ou égale à 2 niveaux de gris par bar au moins dans une plage de pression comprise entre 10 % et 70 % de ladite pression maximale, et
3) lors d'un essai comprenant les huit opérations suivantes, à une température comprise entre 20° et 30° :
a) gonfler ledit pneumatique (10) à une pression supérieure ou égale à 1 bar ;
b) faire reposer ladite bande de roulement sur ladite surface de repos (3), avec ladite feuille (9) interposée entre ladite bande de roulement et ladite surface de repos ;
c) introduire ledit faisceau de rayons lumineux dans la plaque ;
d) pousser ladite bande de roulement contre ladite surface de repos avec une force perpendiculaire à ladite surface de repos et présentant une valeur qui augmente linéairement pendant une minute jusqu'à une valeur prédéterminée égale à la moitié d'un indice de charge dudit pneumatique,
e) acquérir une première image de ladite zone d'empreinte à ladite valeur prédéterminée de la force perpendiculaire ;
f) augmenter par la suite ladite valeur de la force perpendiculaire linéairement pendant une minute jusqu'à une valeur maximale égale audit indice de charge et, par la suite, maintenir ledit pneumatique poussé contre ladite surface de repos avec ladite force égale à ladite valeur maximale pendant un intervalle de temps égal à 5 minutes ;
g) diminuer par la suite ladite valeur de la force perpendiculaire linéairement pendant une minute à partir de ladite valeur maximale jusqu'à ladite valeur prédéterminée et acquérir une seconde image de ladite zone d'empreinte à ladite valeur prédéterminée,
h) associer une valeur de pression correspondante à chaque pixel de la première et de la seconde image au moyen de ladite courbe caractéristique,
une différence, en valeur absolue, entre une première zone occupée par des pixels de la première image, pour laquelle ladite valeur de pression correspondante est supérieure ou égale à 0,5 bar, et une seconde zone occupée par des pixels de la seconde image, pour laquelle ladite valeur de pression correspondante est supérieure ou égale à 0,5 bar, est inférieure ou égale à 5 % de ladite première zone.

2. Procédé selon la revendication 1, dans lequel, à ladite pression maximale prédéterminée à détecter, ladite courbe caractéristique prend une valeur de niveau de gris qui est inférieure ou égale à 80 % dudit niveau de gris à grande échelle, de préférence inférieure ou égale à 70 % dudit niveau de gris à grande échelle.

3. Procédé selon l'une quelconque des revendications précédentes, dans lequel ladite courbe caractéristique présente une première dérivée qui est supérieure ou égale à 3 niveaux de gris par bar, plus préférentiellement supérieure ou égale à 5 niveaux de gris par bar, au moins dans une plage de pression comprise entre 10 % et 70 % de ladite pression maximale, de préférence entre 10 % et 90 % de ladite pression maximale.

4. Procédé selon l'une quelconque des revendications précédentes, dans lequel ladite courbe caractéristique présente une première dérivée qui est inférieure ou égale à 50 niveaux de gris par bar, plus préférentiellement inférieure ou égale à 30 niveaux de gris par bar, au moins dans une plage de pression comprise entre 10 % et 70 % de ladite pression maximale.

5. Procédé selon l'une quelconque des revendications précédentes, dans lequel ladite feuille est constituée de polyuréthane thermoplastique élastomère.

6. Procédé selon la revendication 5, dans lequel ladite feuille est constituée de polyéther de polyuréthane élastomère ou de polyester de polyuréthane élastomère.

7. Procédé selon la revendication 5 ou 6, dans lequel ledit polyuréthane thermoplastique élastomère est obtenu par polymérisation d'isocyanates aromatiques, de préférence par polymérisation de diisocyanates aromatiques choisis parmi : le diisocyanate de naphtalène, le diisocyanate de paraphénylène, le diisocyanate de toluène (TDI) et le diisocyanate de méthylène diphényle ( MDI).

8. Procédé selon la revendication 5 ou 6 ou 7, dans lequel ledit polyuréthane thermoplastique élastomère est choisi dans le groupe des polyuréthanes thermoplastiques élastomères (TPU) commercialisés sous les dénominations commerciales Argoflex^{®} (Argotec), Argothane^{®} (Argotec), la gamme Epurex Platilon^{®}, de préférence Platilon^{®} U (Covestro), Desmopan^{®} (Covestro), Texin^{®} (Covestro), Pearlthane^{™} (Lubrizol), Estane^{®} (Lubrizol), Pellethane^{®} (Lubrizol), Elastollan^{®} (BASF) et Adilithe^{®} (Merylithe).

9. Procédé selon l'une quelconque des revendications précédentes, dans lequel ladite feuille est d'une épaisseur inférieure ou égale à 150 microns et supérieure ou égale à 10 microns.

10. Système (1) pour détecter une répartition de pression dans une zone d'empreinte d'un pneumatique (10), le système comprenant :
- une plaque (2) en matériau transparent présentant une surface de repos (3),
- une caméra (4) adaptée pour acquérir une image numérique de ladite surface de repos (11) ;
- une source de lumière (5) configurée pour introduire un faisceau de rayons lumineux (6) dans la plaque, lesdits rayons lumineux (6) se propageant dans la plaque selon un angle (7), par rapport à une ligne perpendiculaire à ladite surface de repos, ledit angle (7) étant supérieur à un angle critique interne associé à ladite surface de repos ;
- une feuille (9) placée au contact de ladite surface de repos,
**caractérisé en ce que** ladite feuille satisfait aux trois conditions suivantes :
1) à une pression maximale prédéterminée à détecter, comprise entre 1 bar et 50 bar, une courbe caractéristique associée à l'ensemble formé par ladite feuille (9), ladite plaque (2), ledit faisceau de rayons lumineux (6) et ladite caméra (4), prend une valeur de niveau de gris qui est inférieure ou égale à 90 % dudit niveau de gris à grande échelle de ladite image numérique, dans lequel la courbe caractéristique interrelie les valeurs de pression exercées sur la feuille et les valeurs de niveau de gris correspondantes dans l'image acquise par la caméra (4),
2) ladite courbe caractéristique présente une première dérivée supérieure ou égale à 2 niveaux de gris par bar au moins dans une plage de pression comprise entre 10 % et 70 % de ladite pression maximale, et
3) lors d'un essai comprenant les huit opérations suivantes, à une température comprise entre 20° et 30° :
a) gonfler ledit pneumatique (10) à une pression supérieure ou égale à 1 bar ;
b) faire reposer une bande de roulement (11) dudit pneumatique sur ladite surface de repos (3), avec ladite feuille (9) interposée entre ladite bande de roulement et ladite surface de repos ;
c) introduire ledit faisceau de rayons lumineux (6) dans la plaque ;
d) pousser ladite bande de roulement contre ladite surface de repos avec une force perpendiculaire à ladite surface de repos et présentant une valeur qui augmente linéairement pendant une minute jusqu'à une valeur prédéterminée égale à la moitié d'un indice de charge dudit pneumatique,
e) acquérir une première image de ladite zone d'empreinte à ladite valeur prédéterminée de la force perpendiculaire ;
f) augmenter par la suite ladite valeur de la force perpendiculaire linéairement pendant une minute jusqu'à une valeur maximale égale audit indice de charge et, par la suite, maintenir ledit pneumatique poussé contre ladite surface de repos avec ladite force égale à ladite valeur maximale pendant un intervalle de temps égal à 5 minutes ;
g) diminuer par la suite ladite valeur de la force perpendiculaire linéairement pendant une minute à partir de ladite valeur maximale jusqu'à ladite valeur prédéterminée et acquérir une seconde image de ladite zone d'empreinte à ladite valeur prédéterminée,
h) associer une valeur de pression correspondante à chaque pixel de la première et de la seconde image au moyen de ladite courbe caractéristique,
une différence, en valeur absolue, entre une première zone occupée par des pixels de la première image, pour laquelle ladite valeur de pression correspondante est supérieure ou égale à 0,5 bar, et une seconde zone occupée par des pixels de la seconde image, pour laquelle ladite valeur de pression correspondante est supérieure ou égale à 0,5 bar, est inférieure ou égale à 5 % de ladite première zone.

11. Système selon la revendication 10, dans lequel ladite feuille est constituée de polyuréthane thermoplastique élastomère, de préférence de polyéther de polyuréthane élastomère ou de polyester de polyuréthane élastomère.
